(19) Europäisches Patentamt
European Patent Office
Office européen des brevets

(11) **EP 4 571 520 A1**

## (12) EUROPEAN PATENT APPLICATION

(43) Date of publication:
**18.06.2025   Bulletin 2025/25**

(21) Application number: **24219348.0**

(22) Date of filing: **12.12.2024**

(51) International Patent Classification (IPC):
**G06F 11/30** (2006.01)

(52) Cooperative Patent Classification (CPC):
**G06F 11/3051; G06F 11/3058;** G06F 11/3041;
G06F 11/3093

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **13.12.2023   CZ 20230482**

(71) Applicant: **Digiteq Automotive s.r.o.**
**14221 Praha 4 (CZ)**

(72) Inventors:
• **Sychra, Simon**
  **51231 Roztoky u Jilemnice (CZ)**

• **Novak, Tomas**
  **27601 Melnik (CZ)**
• **Krista, Jakub**
  **28802 Nymburk (CZ)**
• **Vrabec, Michal**
  **29301 Mlada Boleslav (CZ)**
• **Cernovsky, Jiri**
  **15200 Praha 5 (CZ)**
• **Gottlieb, Michal**
  **28915 Vykan (CZ)**
• **Bracok, Marian**
  **29301 Mlada Boleslav (CZ)**

(74) Representative: **Tomickova, Dana**
**PatentEnter s.r.o.**
**Koliste 1965/13a**
**602 00 Brno (CZ)**

(54) **DEVICE FOR AUTOMATIC DETECTION OF THE CONNECTION OF A UNIT INTENDED FOR FLASHING AND A METHOD OF AUTOMATIC DETECTION USING THIS DEVICE**

(57)    The object of the invention is a device and method for automatic detection of the connection of a unit (1) intended for flashing. The device comprises a power source (2) and a first connector (3) for connecting the unit (1) intended for flashing. The device further comprises a second connector (4) connected to the first connector (3), a control unit (5) connected to the second connector (4), a first switch (6), a second switch (7), and a first resistor (8), wherein the first switch (6) and the second switch (7) are connected in parallel between the power source (2) and the first connector (3). The first resistor (8) is connected in one branch of the parallel connection. The control unit (5) is connected to the first switch (6) and the second switch (7) and comprises a communication module for sending a message to the first connector (3) and an evaluation module for determining whether the unit (1) intended for flashing is connected to the first connector (3), based on a drop in the voltage value at a place between the first connector (3) and the node where the branches of the parallel connection are connected.

Fig. 1

**Description**

Technical Field

The present invention relates to a field of unit flashing, wherein specifically it relates to the automatic detection of the connection of a unit intended for flashing.

Background of the Invention

Flashing is the process of rewriting the firmware of a unit that is to be flashed, wherein the term "flashing," originating in English, is commonly used in Czech as well. In other words, it can be said that flashing involves programming, upgrading, or updating the respective unit. In practice, flashing is used e.g. in the automotive industry, where control units of vehicles are flashed to be able to reliably provide all the required functions.

Flashing is most commonly performed during a so-called flashing event, where the flashing is carried out by a qualified technician using a computer and diagnostic hardware. The commonly used procedure of such manual flashing requires many manual steps, which significantly increases both the flashing time and the likelihood of human error. Time inefficiency also arises from the fact that a larger number of short flashes is often required during a flashing event. While a short flash itself takes less than two minutes, for example, the time required for manipulation with the unit is close to the time of the flash itself. Last but not least, there are also significant demands on the expertise and experience of the qualified technician, as each flash is unique and requires expertise to determine which procedure to choose.

Currently, however, there are solutions that automate the flashing process, thereby eliminating at least some of the disadvantages mentioned above. Although the flashing itself is automatic, there are still several manual steps that need to be taken, such as physically connecting the unit to the device performing the automatic flashing as well as confirming that the respective unit is connected to the device. In the state of the art, confirmation of the unit connection is typically done by pressing a button. Such a solution, however, represents an additional manual step and does not eliminate the risk of human error, e.g. for a case where a button press confirms the replacement of a unit with another one, even though no actual replacement has taken place. The risk of human error increases with the number of units to be flashed which can be connected to the flashing device at the same time.

The principle of automatic detection of the connection of a unit intended for flashing is described in patent literature, specifically e.g. in patent documents CN115098133 A and CN113626048 A. In the document CN115098133 A, the PING command is used for the automatic detection of the connection of the unit, while in the document CN113626048 A normal communication with the unit (including the connection of the unit) is detected based on measuring the duration of the receipt of the message. This time is then compared to a predetermined time value.

However, it would be desirable to come up with an alternative solution that would allow for the automatic detection of the connection of a unit intended for flashing while also being characterized by a simple arrangement that does not require time measurements or any knowledge of the connected unit for the detection. The method of detection by direct current measurement also seems to be not very suitable due to the wide range of currents (approximately 100 mA to 10 A). The proposed solution should also be easy to implement and budget-friendly.

Summary of the Invention

The above shortcomings are eliminated to a certain extent by a device for automatic detection of the connection of a unit intended for flashing, wherein this device comprises a power source and a first connector for connecting the unit intended for flashing, wherein the power source is connected to the first connector via a power cable. The essence of the device of the present invention lies in the fact that it further comprises a second connector connected to the first connector, a control unit connected to the second connector, a first switch, a second switch, and a first resistor. The first switch and the second switch are connected in parallel between the power source and the first connector, wherein the first branch of the parallel connection comprises the first switch and the first resistor, and the second branch of the parallel connection comprises the second switch. The control unit is connected via the second connector to the first switch and the second switch for their switching on and off, and further, it is connected via the second connector to the power cable at a place between the first connector and the node where the first branch of the parallel connection and the second branch of the parallel connection are connected. Further, the control unit comprises a communication module for sending a message to the first connector and an evaluation module for determining whether the unit intended for flashing is connected to the first connector, based on a drop in voltage value at the place between the first connector and the specified node.

The main advantage of the device of the present invention lies in the fact that it allows for automatic detection of the connection of the unit intended for flashing. This eliminates the need to manually confirm the connection of the unit intended for flashing, thus streamlining the entire flashing process and eliminating the risk of human error. The only task required by the operator is to physically connect the unit intended for flashing and then disconnect it after the flashing is performed. Additionally, no precise timing or knowledge of the specific connected unit is required to determine whether the unit intended for flashing is connected to the first connector. In fact, the determination of the connection status is determined by a voltage drop, the detection of which is simple.

The device for automatic detection is an electrical circuit connected to a flashing device, wherein the aforementioned power source can be a part of the flashing device itself, and thus advantageously powers not only this electrical circuit for automatic detection but also the flashing device. The electric circuit for automatic detection can essentially be connected to any flashing device. Preferably, multiple such electrical circuits, i.e. devices for automatic detection, can be connected to the flashing device, allowing implementation of e.g. parallel or sequential flashing of multiple units intended for flashing. However, each device for automatic detection allows for the connection of one unit intended for flashing. The total number of devices for automatic detection can be selected e.g. based on spatial requirements, i.e. e.g. with regard to the storage space provided by the flashing device.

The unit intended for flashing can primarily be a vehicle's control unit, but it can also be another control unit that requires flashing for some reason.

Due to the presence of the first switch and the first resistor in the first branch of the parallel connection of switches, this first branch is adapted for the so-called soft powering of the first connector (and consequently also of the unit intended for flashing, if it's connected to the first connector). This allows the unit intended for flashing to be powered in its so-called low-energy mode, but it does not allow for full powering in its so-called normal mode. In the low-energy mode, the unit intended for flashing can receive a message sent from the control unit. However, the acknowledgement of this message is associated with a change in the powering mode of the unit intended for flashing, i.e. a transition from the low-energy mode to the normal mode.

The first resistor can be connected in the first branch behind the first switch, but alternatively it can also be connected before the first switch. The resistance value of the first resistor can preferably be selected as 10 kΩ. In general, the resistance value of the first resistor is selected to be neither too low nor too high. If the resistance value of the first resistor is too low, it could result in the unit intended for flashing being powered through the first branch not only in its low-energy mode but also in its normal mode. If, on the other hand, if the resistance value of the first resistor is too high, the unit intended for flashing may not be sufficiently powered in its low-energy mode (and thus not be able to receive the message sent from the control unit). The resistance value of the first resistor is thus preferably determined based on the expected power consumption of the unit intended for flashing and the significant transition from its low-energy mode to its normal mode. In other words, the resistance value of the first resistor is selected such that the power source connected via the first resistor provides power to the unit intended for flashing in its low-energy mode but not in its normal mode. For example, the resistance value of the first resistor can be selected from a range of 4.7 kΩ to 100 kΩ.

The above described case of soft powering, where the first switch is on and the second switch is off, corresponds to the state for detecting the connection of the unit intended for flashing. On the contrary, if the second switch is on and the first switch is off (or also on), the unit intended for flashing, if connected to the first connector, is powered via the second branch, i.e. it is so-called hard powering. This second case corresponds to the flashing state. To switch between these states, a control unit is used, which is adapted to control (switching on and off) the individual switches.

The control unit can be implemented as a microprocessor unit that comprises a memory, an A/D converter, an amplifier, and relevant modules (communication module and evaluation module) to perform the individual steps of the method of the present invention. For example, the MCP6001-OT microchip can be used as the microprocessor. The A/D converter is used to convert an analog signal (voltage signal) measured by the control unit at the place between the first connector and the node where the first branch of the parallel connection and the second branch of the parallel connection are connected. The evaluation module is adapted to detect drops in the voltage value at this place, wherein a voltage threshold value can be set for detecting the voltage drop. If the voltage value measured by the control unit is lower than the set voltage threshold value, the evaluation module outputs information indicating that the unit intended for flashing is connected to the first connector. The evaluation module can be a software module, i.e., an algorithm that compares the measured voltage values with a set threshold value according to instructions stored in the memory. Alternatively, the evaluation module can also be a hardware module, which can be, for example, an analog comparator.

The first switch is preferably a relay, and the second switch is also preferably a relay. The specific type of the relay can be selected as needed, wherein in particular e.g. the SPST-NO type of relay can be used, i.e. a single-pole switch contact relay whose idle state is "off" and active state is "on". Alternatively, the first switch and the second switch can be implemented differently, e.g. as semiconductor switches. The first switch and the second switch can also have different implementations, e.g. the first switch can be a relay while the second switch might be a semiconductor switch, and so on. The control (i.e. switching on and off) of the first switch and the second switch is implemented by the control unit that sends the control signal to the individual switches. In the case of relay switches, the control signal is brought to the coils of the individual relays.

The device of the present invention further preferably comprises a voltage divider connected to the power cable at a place between the first connector and the node where the first branch of the parallel connection and the second branch of the parallel connection are connected. Connecting a voltage divider is advantageous for the case when the control unit operates with a different voltage (e.g. 5 V, but a control unit with a different operating voltage can also be used) than the voltage provided by the power source (e.g. 12 V, but a power source providing a different voltage can also be used) and brought to the first connector. The voltage divider operates on the principle of two resistors connected in series (here a second and a third resistor) and provides an output voltage that is proportional to the input voltage. This proportionality expresses the voltage divider coefficient, calculated as the ratio of the resistance value of the resistor on which the output voltage is measured, to the sum of the resistance values of both resistors. The resistance values of the second resistor and the third resistor can be selected in various ways, as long as the resulting voltage divider coefficient is such that its output voltage (i.e. the voltage brought to the control unit) falls within the required voltage range with which the control unit operates. If a voltage divider is connected between the first connector and the said node, the voltage threshold value for determining the voltage drop is further multiplied by the voltage divider coefficient to relate it to the operating voltage of the control unit.

The device of the present invention further preferably comprises a capacitor connected to the power cable at a place between the first connector and the node where the first branch of the parallel connection and the second branch of the parallel connection are connected. The capacitor is used to eliminate induced interference and rapid events, i.e. to increase the stability of the whole circuit. The capacitance value of this capacitor can be e.g. 100 nF, but it can also be chosen differently, taking into account the frequency of the interfering signals.

The device of the present invention further preferably comprises an operation amplifier in a voltage follower circuit connected to the power cable at a place between the first connector and the node where the first branch of the parallel connection and the second branch of the parallel connection are connected. The connection of the operation amplifier as a voltage follower is defined by connecting the inverting input of the operation amplifier to its output. The output voltage of the operation amplifier follows the input voltage, while its low output impedance preferably eliminates the influence of the impedance of the control unit's A/D converter. As the operation amplifier, e.g. the MCP6001 -OT microchip is used, but alternatively any other operation amplifier connected in the voltage follower circuit can be used.

All three components mentioned above (voltage divider, capacitor, and operation amplifier) can preferably be connected in series, in any order, between the first connector and the node where the first branch of the parallel connection and the second branch of the parallel connection are connected. Alternatively, only some of the listed components can be connected in this way, or possibly none of these components at all. Such an embodiment would simply not provide the additional benefits described above.

The first connector and the second connector are preferably connected via a CAN bus. The CAN (Controller Area Network) bus is preferable primarily because it represents a simple and accessible technology for ensuring communication between the control unit and the first connector. This enables reliable and repeatable sending of a message from the control unit to the first connector, and the receipt of this message by the unit intended for flashing, if it is connected to the first connector. Preferably, the communication module is a CAN communication module, which supports the relevant protocols. Alternatively, the first connector and the second connector can be connected in a different way, e.g. using a LIN bus or Ethernet, as long as this connection allows sending of said message and said acknowledgement. However, the CAN bus is easier to implement.

The aforementioned shortcomings are eliminated to a certain extent by a method of automatic detection of the connection of the unit intended for flashing using the device of the present invention. The essence of the method of the present invention lies in the fact that it comprises the steps of:

- setting the device of the present invention to a detection state using the control unit, wherein in the detection state the first switch is on and the second switch is off.

- sending a message from the control unit via the second connector to the first connector,

- measuring the voltage value by the control unit at the place between the first connector and the node where the first branch of the parallel connection comprising the first switch and the first resistor and the second branch of the parallel connection comprising the second switch are connected, and

- determining whether the unit intended for flashing is connected to the first connector based on the measured voltage value, wherein if the control unit detects a drop in the measured voltage value, the control unit determines that the unit intended for flashing is connected to the first connector.

setting the device to the detection state is implemented by the control unit, which sends the corresponding control signal to the corresponding switch. For example, if both the first switch and the second switch are in the off position (i.e. in a state that prevents powering of the unit intended for flashing and is used e.g. during its restart), it is sufficient for the control unit to switch on the first switch with the first control signal. For example, if both the first switch and the second switch are in the on position (i.e. in the flashing state, as will be explained further below), it is sufficient for the control unit to switch off the second switch with the second control signal. If the first switch and the second switch are already set to the detection state, the control unit does not need to send any control signal to either switch. In the detection state, the unit intended for flashing, when connected to the first connector, is powered so-called softly, which allows the unit intended for flashing to be powered in its so called low-energy mode, but does not allow it to be powered in its so-called normal mode.

The step of sending the message from the control unit via the second connector to the first connector is preferably carried out repeatedly and continuously by the communication module at specific time intervals. The content of the message can be arbitrary and is not important.

The step of measuring the voltage value at the place between the first connector and the said node is preferably also carried out repeatedly and continuously at specific time intervals. The voltage can be measured e.g. using a measuring cable, wherein the measured data are subsequently converted into digital data using the A/D converter for processing by the control unit.

Subsequently, these data are processed by the control unit, specifically by the evaluation module thereof, to determine whether the unit intended for flashing is connected to the first connector. The processing of the data is based on detecting drops in voltage. If the unit intended for flashing is connected to the first connector, it is softly powered through the first resistor, which allows it to receive the message sent from the control unit. This message (regardless of the content thereof) must be acknowledged by the unit intended for flashing. However, for such acknowledgement, the unit intended for flashing must change its power mode, i.e. switch from the so-called low-energy mode to the so-called normal mode. However, such a transition will not occur, precisely because in the detection state, the unit intended for flashing is softly powered through the first resistor. However, there will be an increase in the current consumed by the unit intended for flashing, along with a drop in voltage measured by the control unit. However, if the first connector is not powered softly (i.e., if the device is not set to detection mode), or if the unit intended for flashing is not connected to the first connector, there will be no drop in voltage.

For detecting a drop in voltage, the measured values are preferably compared to a determined voltage threshold value, wherein if the measured voltage value drops below this determined threshold value, the control unit determines that the unit intended for flashing is connected to the first connector. The voltage threshold value can vary and can be chosen based on the parameters of the individual components, primarily on the resistance value of the first resistor, but also on the power section of the unit intended for flashing. The voltage threshold value can also be chosen based on the parameters of the voltage divider, if the device includes one. If the device includes the voltage divider, the voltage threshold value is derived from the case without the voltage divider (preferably e.g. around 7 V), but it is multiplied by the voltage divider coefficient to relate this value to the operating voltage of the control unit. Alternatively, thus voltage threshold value can be further adjusted, rounded, or otherwise modified as needed.

Preferably, if the control unit determines that the unit intended for flashing is connected to the first connector, the device for automatic detection is set to the flashing state by the control unit, wherein at least the second switch is on in the flashing state. The first switch can therefore be either on or off in the flashing state. After the automatic detection of the connection of the unit intended for flashing, the unit intended for flashing will be automatically flashed, wherein the unit intended for flashing is so-called hard powered through the second branch of the parallel connection by the power source. In the flashing state, the unit intended for flashing is fully powered, and its current consumption is not limited in a way that would restrict its functionality. The flashing occurs according to the instructions contained in the control sequence provided to the flashing device, to which the device four for automatic detection of the present invention is connected. The only task required by the operator is to physically connect the unit intended for flashing and then disconnect it afterwards.

Description of Drawings

A summary of the invention is further clarified using exemplary embodiments thereof, which are described with reference to the accompanying drawings, in which:

fig. 1 shows a simplified block diagram of the device for automatic detection of the present invention, and

fig. 2 shows a detailed diagram of the device for automatic detection in the first exemplary embodiment of the present invention.

Exemplary Embodiments of the Invention

The invention will be further clarified using exemplary embodiments with reference to the respective drawings.

In the first exemplary embodiment, the device for automatic detection of the present invention comprises a power source 2, a first connector 3, a second connector 4, a control unit 5, a first switch 6, a second switch 7, a first resistor 8, a CAN 9 bus, a voltage divider 10, a capacitor 11, and an operation amplifier 12. These components form an electrical circuit that is connected to the flashing device or is a part thereof. The power source 2 is, for example, part of the flashing device, and therefore powers not only the relevant electrical circuit but also the flashing device itself. On the other hand, the unit 1 intended for flashing, such as a vehicle's control unit, is not part of the flashing device or the device for automatic detection. It is because it is not connected permanently but only when it needs to be flashed.

The specific arrangement of the individual components and their mutual connections will be described in more detail below.

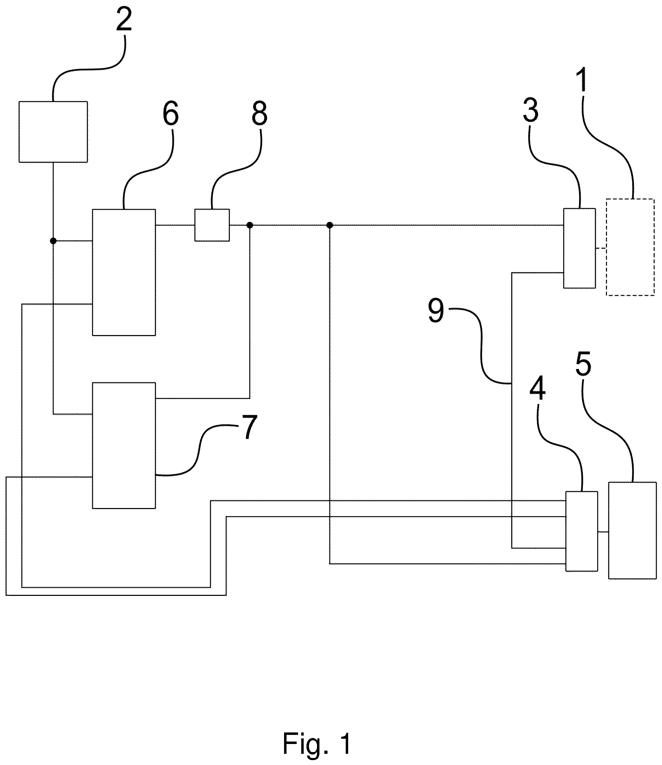

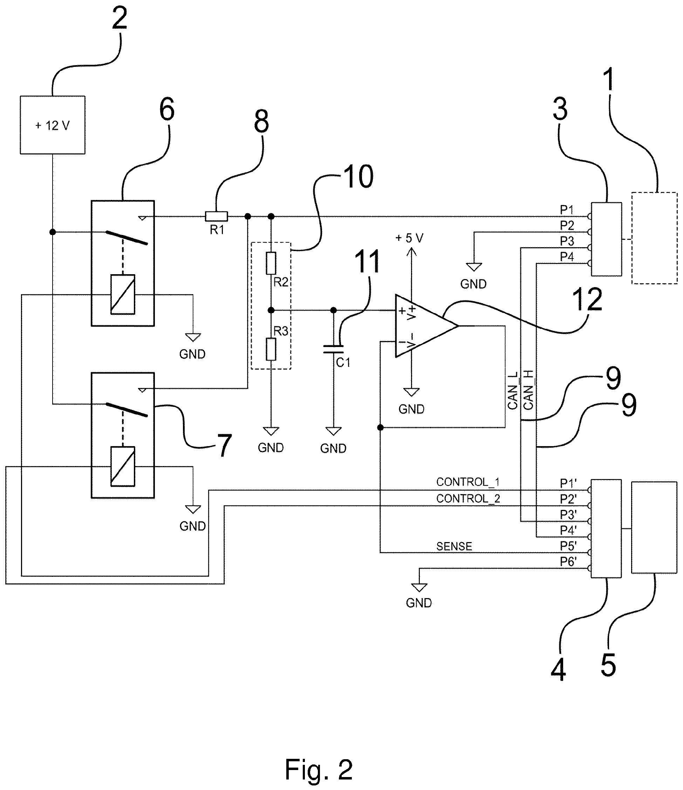

As shown in the simplified diagram of fig. 1 or the detailed diagram of fig. 2, the power source 2 is connected to the first connector 3, which is adapted for connecting the unit 1 intended for flashing. The unit 1 intended for flashing is indicated by a dashed line in figs. 1 and 2, as it either connected or not to the first connector 3 (which is precisely what is being detected). As an example, power source 2 providing a voltage of 12 V is used. The first connector 3 in the shown exemplary embodiment comprises four pins, labeled P1 to P4 in fig. 2. The pin P1 is used for connection to the power source 2, i.e. it carries the power cable, the pin P2 is used for connection to the ground (marked with the abbreviation "GND" for "ground"), and the pins P3 and P4 are used for connection to the second connector 4.

Specifically, the first connector 3 is connected to the second connector 4 via the CAN 9 (Controller Area Network) bus, using two wires (labeled in fig. 2 as "CAN_H" and "CAN_L") with different voltage values. "CAN_H" corresponds to the wire with the higher voltage value, typically ranging from 2.5 V to 3.75 V, while "CAN_L" corresponds to the wire with the lower voltage value, usually ranging from 1.25 V to 2.5 V. The pins P3 and P4 are connected to the corresponding pins P3' and P4' of the second connector 4. The mutual connection between the first connector 3 and the second connector 4 via the CAN 9 bus enables the sending of messages between the first connector 3 and the control unit 5, which is connected to the second connector 4, as will be further described.

In addition to the pins P3' and P4' for connecting to the first connector 3, the second connector 1 also comprises the pins P1' and P2', through which the control unit 5 is connected to the first switch 6 and the second switch 7, respectively. These connections are labeled "CONTROL_1" and "CONTROL_2", respectively, in fig. 2, as the control unit 5 uses these connections to send control signals for controlling (switching on or off) the first switch 6 and the second switch 7, respectively. The second connector 4 further comprises pin P6' for connecting to the ground and pin P5' for measuring the voltage signal to detect whether the unit 1 intended for flashing is connected to the first connector 3 or not. This is indicated for better clarity in fig. 2 with the label "SENSE".

The first switch 6 and the second switch 7 are connected in parallel between the power source 2 and the first connector 3. Therefore, there is a first node where the electrical circuit branches (diverges) into two parallel branches, and a second node where the electrical circuit connects (converges) again. The first switch 6 is located in the first branch, along with the first resistor 8, wherein the first resistor 8 is in the shown embodiment connected behind the first switch 6, i.e. at its output, as can be seen in fig. 1 or fig. 2. The first switch 6 is, for example, a relay, specifically for example, the SPST-NO type of relay, i.e. a single-pole switch contact relay whose idle state is "off" and active state is "on". For example, the first resistor 8 has a resistance value of R1 = 10 kΩ. This value is chosen to be neither too low nor too high, as will be explained in more detail below.

In the second branch of the parallel connection, there is the second switch 7, which in the described exemplary embodiment is implemented in the same way as the first switch 6, that is, also as a relay. However, the key difference lies in the fact that the first resistor 8 is connected in the first branch, but not in the second branch. Therefore, if the first switch 6 is on and the second switch 7 is off, then the power source 2 is connected to the first connector 3 via the first resistor 8. This means that the unit 1 intended for flashing, if connected to the first connector 3, is powered so-called "softly" by the power source 2. This allows the unit 1 intended for flashing to be powered in its so-called low-energy mode, but it does not allow for full powering in its so-called normal mode. In the low-energy mode, the unit 1 intended for flashing can receive a message sent over the CAN 9 bus. The acknowledgement of this message is associated with a change in the powering mode the unit 1 intended for flashing, i.e. a transition from the low-energy mode to the normal mode.

It is important to note here that if the resistance value R1 of the first resistor 8 is chosen to be too high, the unit 1 intended for flashing in its low-energy mode may not be sufficiently powered (and thus would be unable to receive a message sent over the CAN 9 bus). If, on the other hand, the resistance value R1 is chosen to be too low, it could lead to the unit 1 intended for flashing being powered by this soft power source 2 not only in its low-energy mode but also in its normal mode. The value of R1 = 10 kΩ used in the first exemplary embodiment was determined based on the assumption of the consumption of the unit 1 intended for flashing and a significant transition from its low-energy mode to its normal mode as follows. The expected consumption of the unit 1 intended for flashing in its low-energy mode was a maximum of 100 μA (upper limit case for high consumption) and in its normal mode at least 10 mA (lower limit case for low consumption). The resistance value R1 of the first resistor 8 for safe and reliable operation at a drop of 1 V, was determined to be:

$$R1 = \frac{1\ V}{0{,}0001\ A} = 10\ k\Omega$$

It was subsequently verified that the drop in voltage when transitioning from the low-energy mode to the normal

6

mode would be sufficient for detecting the drop in voltage by determining the maximum flowing current $I_{max}$ when using a 12V power source 2.

$$I_{max} = \frac{12\ \text{V}}{10000\ \Omega} = 1{,}2\ \text{mA}$$

The calculated maximum current is an order of magnitude outside the operating values of the unit 1 intended for flashing, such that a drop in voltage can be safely detected. However, the drop in voltage still depends on the power section of the given unit 1 intended for flashing, which does not behave linearly like the first resistor 8 for which the example is valid. Power semiconductors enter the nonlinearity that turn on at a voltage of around 7 V. As a result, the current in practice is even lower.

The above mentioned case of soft powering, where the first switch 6 is on and the second switch 7 is off, corresponds to the state of detecting the connection of the unit 1 intended for flashing.

On the other hand, if the second switch 7 is on and the first switch 6 is off (or also on), the unit 1 intended for flashing, if connected to the first connector 3, is powered via the second branch, i.e. it is so-called hard powering. This second case corresponds to the flashing state, as will be discussed further below.

To detect whether the unit 1 intended for flashing is connected to the first connector 3, and thus to the described circuit and through this circuit also to the flashing device, a measuring cable is brought out from the pin P5' and connected at the third node to the power cable between the power source 2 and the first connector 3. As can be seen in the simplified fig. 1, this third node is located between the second node and the first connector 3, i.e. in the direction away from the power source 2 to beyond the first switch 6, the second switch 7, and the first resistor 8. However, as can be seen in the detailed fig. 2, the control unit 5 (using the pin P5' of the second connector 4) is not directly connected to the said third node in the first exemplary embodiment but rather through additional components. These are the voltage divider 10, the capacitor 11, and the operation amplifier 12.

The said additional components are used to convert the voltage provided by the power source 2 (for example 12 V) to the voltage that the control unit 5 operates with (for example 5 V). This function is performed specifically by the voltage divider 10, which comprises a second resistor with a resistance value R2 = 1 MΩ, for example, and a third resistor with a resistance value R3 = 270 kΩ, for example.

The capacitor 11, which is used to eliminate induced interference and fast events, is connected at the output of the voltage divider 10. For example, the capacitor 11 has a capacitance value of C1 = 100 nF. The components R2, R3, and C1 in the exemplary embodiment together form a first-order RC filter with a 20 dB attenuation per decade. The output impedance of the voltage divider corresponds to the parallel combination of both resistors, and the limit frequency at which the voltage transfer drops by 3 dB (about 70%) can be determined using:

$$f = \frac{1}{2\pi RC} = \frac{1}{2\pi \cdot 213 \cdot 10^3 \cdot 100 \cdot 10^{-9}} = 7{,}5\ \text{Hz}$$

This frequency is high enough to detect the unit's connection while being low enough to suppress significant interference at 50 Hz (almost by 20 dB) and other harmonics.

Further, the operation amplifier 12 is connected between the second connector 4 and capacitor 11, that is in a voltage follower circuit. This means that the inverting input of the operation amplifier 12 is connected to its output. The output voltage of the operation amplifier 12 follows the input voltage, while its low output impedance eliminates the influence of the impedance of the A/D converter of the control unit 5 connected to the second connector 4. One power supply outlet of the operation amplifier 12 has a voltage of 5 V, while the other power supply outlet is connected to the ground. The voltage divider 10 and the capacitor 11 are also connected to a common ground, as indicated by the corresponding labels "GND" in fig. 2. The operation amplifier 12 is, for example, the MCP6001-OT microchip.

The control unit 5 is adapted to control (switch on or off) the first switch 6 and the second switch 7. This is implemented by bringing the control signal to the control element of the first switch 6 (using a cable leading from the pin P1', labeled as "CONTROL_1" in fig. 2) and to the control element of the second switch 7 (using a cable leading from the pin P2', labeled as "CONTROL_2" in fig. 2). In the described exemplary embodiment, the control signal is brought to the coils of the individual relays.

Further, the control unit 5 is adapted to send a message to the first connector 3 via the CAN 9 bus. For this purpose, the control unit 5 comprises a corresponding communication module.

Furthermore, the control unit 5 is adapted to determine whether the unit 1 intended for flashing is connected to the first connector 3. For this purpose, the control unit 5 comprises a corresponding evaluation module. Its input are the voltage values measured using the measuring cable (labeled "SENSE" in fig. 2), which is connected to the pin P5' of the second connector 4 at the place between the second node and the first connector. In the first exemplary embodiment, the voltage values are specifically measured behind the operation amplifier 12 and are converted to a 5V range, in which the control unit 5 operates, for example. The output of the evaluation module is information about whether the unit 1 intended for flashing is connected to the first connector 3, wherein the method of evaluating the measured data is described in more detail in the description of the method below.

In the first exemplary embodiment, the control unit 5 is implemented as a microprocessor unit and comprises, for example, a memory, an A/D converter for converting the measured analog data into digital data, an amplifier, and relevant modules, such that the control unit 5 can perform the individual steps of the method, as will be described in the following section. For example, the ATSAMC21G18A chip is used as the microprocessor.

The method of automatic detection of the connection of the unit 1 intended for flashing with the device described above comprises the following steps.

To detect the connection of the unit 1 intended for flashing, the device for automatic detection must first be set to the detection state, i.e. to the state where the first switch 6 is on and the second switch 7 is off. The control unit 5 therefore sends the respective control signals to the first switch 6 or the second switch 7, and sets the first switch 6 to the on position and the second switch 7 to the off position. For example, if both the first switch 6 and the second switch 7 are in the off position (i.e. in the state that does not allow powering of the unit 1 intended for flashing and is used e.g. during its restart), it is sufficient for the control unit to switch the first switch 6 on via the first control signal ("CONTROL_1"). In this detection state, the first connector 3 is connected to the power source 2 through the first branch of the parallel connection. This means that the voltage from the power source 2 is brought to the first connector 3 through the first resistor 8. The unit 1 intended for flashing, when connected to the first connector 3 in the detection mode, is so-called soft powered, which allows powering the unit 1 intended for flashing in its so-called low-energy mode but does not allow its powering in its so-called normal mode.

The method also comprises the step of sending a message by the control unit 5, specifically by the communication module of the control unit 5, via the second connector 1 to the first connector 3. In the described exemplary embodiment, this message is sent via the CAN 9 bus, wherein the content of the message is not important.

Further, using the measuring cable ("SENSE") brought to the port P5' of the second connector 4 voltage is measured at the place between the second node and the first connector 3. In particular, voltage values are measured behind the operation amplifier 12 and are converted to the 5V range, in which the control unit 5 operates, for example.

The measured values are converted into digital data using the A/D converter, which is then processed by the control unit 5, specifically by the evaluation module of the control unit 5.

The evaluation of the data is based on detecting drops in voltage. If the unit 1 intended for flashing is connected to the first connector 3, it is softly powered through the first resistor 8, which enables it to receive the message sent from the control unit 5 via the CAN 9 bus. This message (regardless of its content) must be acknowledged by the unit 1 intended for flashing. However, for such acknowledgement, the unit 1 intended for flashing must change its power mode, i.e. switch from the so-called low-energy mode to the so-called normal mode. However, such a transition will not occur because in the detection state, the unit intended for flashing is softly powered through the first resistor. However, there will be an increase in the current consumed by the unit 1 intended for flashing and a drop in the voltage measured by the control unit 5 at the place between the first connector 3 and the node where the first branch of the parallel connection and the second branch of the parallel connection are connected.

For evaluation, a specific voltage threshold value is determined, wherein if the measured voltage value drops below this determined threshold value, the control unit 5 determines that the unit 1, intended for flashing, is connected to the first connector 3. The voltage threshold value is chosen based on the parameters of the individual components, primarily on the resistance value R1 of the first resistor 8, but also on the power section of the unit 1 intended for flashing. The voltage threshold value is also chosen based on the parameters of the voltage divider 10, i.e. based on the resistance R2 of the second resistor and the resistance R3 of the third resistor. The voltage divider 10 converts the 12V voltage from the power source 2 to the 5V range used by the control unit 5. In that case, the voltage threshold value is adapted to this range by multiplying by the voltage divider 10 coefficient. The voltage divider 10 coefficient is calculated as the ratio $R3/(R2 + R3)$, which in the given exemplary embodiment is approximately 0.213. The voltage threshold value is typically set to around 1.49 V.

If the first connector 3 is not powered softly (i.e. if the device is not in the detection state described above), or if the unit 1 intended for flashing is not connected to the first connector 3, there will be no drop in voltage. For this purpose, the communication module is adapted for continuous sending of message from the control unit 5 to the first connector 3.

If the control unit 5 determines that the unit 1 intended for flashing is connected to the first connector 3, the device for automatic detection is set to so-called flashing state by the control unit 5. In the flashing state, at least the second switch 7 is on, wherein the first switch is either on or off. The transition from the detection state to the flashing state is thus achieved, for example, by switching the second switch 7 on, using the control signal ("CONTROL_2") sent from the control unit to the control element of the second switch 7, i.e. for example to the coil of this relay. In the flashing state, the unit 1 intended for flashing is fully powered, and its current consumption is not limited in a way that would restrict its functionality. In this state, the flashing device to which the device of the present invention is connected automatically initiates the flashing according to the instructions contained in the control sequence provided to the flashing device. The only task required by the operator is to physically connect the unit 1 intended for flashing and then disconnect it afterwards.

The devices for automatic detection are connected to the flashing device in larger numbers, for example. In one exemplary embodiment, multiple (e.g. six) such devices for automatic detection are connected in parallel to the flashing device, allowing for parallel flashing of a larger number of units 1 intended for flashing. In each parallel branch, there are, as an example, multiple (e.g. six) such devices for automatic detection connected in sequence. This enables sequential flashing, where individual units 1 intended for flashing are queued and flashed one after another. In the embodiment where multiple devices for automatic detection are used, it is sufficient for these devices to have at least one common power source 2. As mentioned earlier, in the first exemplary embodiment, this power source 2 also powers the flashing device.

The device and method of the present invention may be further implemented in further exemplary embodiments other than the first exemplary embodiment described in detail above. The individual alternatives with which the further exemplary embodiments may differ are explained in the summary of the invention section.

For example, in another exemplary embodiment, the control unit is directly connected to the power cable at a place between the first connector and the node where the first branch of the parallel connection and the second branch of the parallel connection are connected. This means that the device in this embodiment does not include the voltage divider 10, capacitor 11, or operation amplifier 12, as also illustrated in the simplified diagram of fig. 1. In this alternative embodiment, the voltage threshold value is set, for example, to 7 V.

Industrial Applicability

The solution described above can further be used for the automatic detection of connections, not only for control units of vehicles but also e.g. of control units of other means of transport.

List of Reference Signs

1 - unit intended for flashing
2 - power source
3 - first connector
4 - second connector
5 - control unit
6 - first switch
7 - second switch
8 - first resistor
9 - CAN bus
10 - voltage divider
11 - capacitor
12 - operation amplifier

**Claims**

1. A device for automatic detection of the connection of a unit (1) intended for flashing, wherein this device comprises a power source (2) and a first connector (3) for connecting the unit (1) intended for flashing, wherein the power source (2) is connected to the first connector (3) via a power cable, **characterized in that** this device further comprises a second connector (4) connected to the first connector (3), a control unit (5) connected to the second connector (4), a first switch (6), a second switch (7), and a first resistor (8), wherein the first switch (6) and the second switch (7) are connected in parallel between the power source (2) and the first connector (3), wherein the first branch of the parallel connection comprises the first switch (6) and the first resistor (8) and the second branch of the parallel connection comprises the second switch (7), wherein the control unit (5) is connected via the second connector (4) to the first switch (6) and the second switch (7) for their switching on and off, and it is further connected via the second connector (4) to the power cable at a place between the first connector (3) and the node where the first branch of the parallel connection and second branch of the parallel connection are connected, wherein the control unit (5) comprises a communication module for sending a message to the first connector (3) and an evaluation module for determining if the unit (1) intended for flashing is connected to the first connector (3), based on a drop in the voltage value at the place between the first connector (3) and said node.

2. The device according to claim 1, **characterized in that** the first switch (6) is a relay and the second switch (7) is a relay.

3. The device according to any of the preceding claims, **characterized in that** it further comprises a voltage divider (10) connected to the power cable at a place between the first connector (3) and the node where the first branch of the parallel connection and the second branch of the parallel connection are connected.

4. The device according to any of the preceding claims, **characterized in that** it further comprises a capacitor (11) connected to the power cable at a place between the first connector (3) and the node where the first branch of the parallel connection and the second branch of the parallel connection are connected.

5. The device according to any of the preceding claims, **characterized in that** it further comprises an operation amplifier (12) in a voltage follower circuit connected to the power cable at a place between the first connector (3) and the node where the first branch of the parallel connection and the second branch of the parallel connection are connected.

6. The device according to any of the preceding claims, **characterized in that** the first connector (3) and the second connector (4) are connected via a CAN bus (9).

7. A method of automatic detection of the connection of the unit (1) intended for flashing using the device according to any of the preceding claims 1 to 6, **characterized in that** it comprises the steps of:

   - setting the device according to any of the preceding claims 1 to 6 to a detection state by the control unit (5), wherein in the detection state the first switch (6) is on and the second switch (7) is off.
   - sending a message from the control unit (5) via the second connector (4) to the first connector (3),
   - measuring the voltage value by the control unit (5) at the place between the first connector (3) and the node where the first branch of the parallel connection comprising the first switch (6) and the first resistor (8) and the second branch of the parallel connection comprising the second switch (7) are connected, and
   - determining whether the unit (1) intended for flashing is connected to the first connector (3) based on the measured voltage value, wherein if the control unit (5) detects a drop in the measured voltage value, the control unit (5) determines that the unit (1) intended for flashing is connected to the first connector.

8. The method according to claim 7, **characterized in that** if the control unit (5) determines that the unit (1) intended for flashing is connected to the first connector (3), the device for automatic detection is set to the flashing state by the control unit (5), wherein at least the second switch (7) is on in the flashing state.

Fig. 1

Fig. 2

| | Europäisches Patentamt European Patent Office Office européen des brevets | **EUROPEAN SEARCH REPORT** | **Application Number** EP 24 21 9348 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/106813 A1 (POLASA RAKESH KUMAR [IN] ET AL) 6 April 2023 (2023-04-06) * paragraph [0019] - paragraph [0029] * * paragraph [0059] - paragraph [0062] * * paragraph [0091] - paragraph [0099] * * figures 2,3 * * paragraph [0009] - paragraph [0010] * ----- | 1-8 | INV. G06F11/30 |

**TECHNICAL FIELDS SEARCHED (IPC)**

G06F

The present search report has been drawn up for all claims

| Place of search | Date of completion of the search | Examiner |
|---|---|---|
| Munich | 22 April 2025 | Milasinovic, Goran |

EPO FORM 1503 03.82 (P04C01)

## ANNEX TO THE EUROPEAN SEARCH REPORT
## ON EUROPEAN PATENT APPLICATION NO.

EP 24 21 9348

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2025

| Patent document cited in search report | Publication date | Patent family member(s) | | Publication date |
|---|---|---|---|---|
| US 2023106813 A1 | 06-04-2023 | US | 2021320514 A1 | 14-10-2021 |
| | | US | 2023106813 A1 | 06-04-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 115098133 A

- CN 113626048 A